(19) **Europäisches Patentamt European Patent Office Office européen des brevets**

(11) **EP 3 763 216 B1**

(12) **EUROPEAN PATENT SPECIFICATION**

(45) Date of publication and mention
of the grant of the patent:
**12.02.2025 Bulletin 2025/07**

(51) International Patent Classification (IPC):
**A21D 2/16** *(2006.01)*    **A21D 8/02** *(2006.01)*
**A21D 10/00** *(2006.01)*

(21) Application number: **20187476.5**

(52) Cooperative Patent Classification (CPC):
**A21D 2/165; A21D 10/005**

(22) Date of filing: **08.07.2015**

(54) **USE OF A FAT PARTICLES IN THE PREPARATION OF FARINACEOUS PRODUCTS**

VERWENDUNG VON FETTPARTIKELN BEI DER HERSTELLUNG VON MEHLHALTIGEN
PRODUKTEN

UTILISATION DE PARTICULES GRASSES DANS LA PRÉPARATION DE PRODUITS FARINEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2014 EP 14177511**

(43) Date of publication of application:
**13.01.2021 Bulletin 2021/02**

(62) Document number(s) of the earlier application(s) in
accordance with Art. 76 EPC:
**15750468.9 / 3 169 159**

(73) Proprietor: **CSM Bakery Solutions Europe
Holding B.V.
1019 GM Amsterdam (NL)**

(72) Inventors:
• **HELD, Wolgang
1101 EE Amsterdam (NL)**
• **HOFLAND, Gerard Willem
2355 BG Hoogmade (NL)**
• **MOONEN, Johannes Hubertus Elise
3584 GL Utrecht (NL)**

• **STOLK, Maarten
3812 CE Amersfoort (NL)**

(74) Representative: **Nederlandsch Octrooibureau
P.O. Box 29720
2502 LS The Hague (NL)**

(56) References cited:
WO-A1-2005/014158    WO-A1-2011/108919
WO-A1-2013/032318    WO-A2-02/100183
WO-A2-2004/037004    JP-A- 2001 316 259
US-A- 3 528 823    US-A- 3 582 355
US-A1- 2005 123 667

• MUNUKLU ET AL: "Particle formation of edible
fats using the supercritical melt micronization
process (ScMM)", THE JOURNAL OF
SUPERCRITICAL FLUIDS, ELSEVIER,
AMSTERDAM, NL, vol. 43, no. 1, 14 September
2007 (2007-09-14), pages 181 - 190,
XP022245382, ISSN: 0896-8446, DOI: 10.1016/
J.SUPFLU.2007.07.002
• DATABASE GNPD [online] MINTEL; 15 November
2013 (2013-11-15), ANONYMOUS: "Whole Wheat
Pancake Batter", XP055734947, retrieved from
www.gnpd.com Database accession no. 2230080

**Description**

**TECHNICAL FIELD OF THE INVENTION**

The present invention relates to a process of preparing a bakery ingredient mix in the form of a pourable liquid comprising the addition of fat particles. process

**BACKGROUND OF THE INVENTION**

Bread, pizza, cakes, pastries, croissants, brioches, pannetones, pies, doughnuts, Berliner, muffins, tarts, quiches, cookies, scones, crackers, pretzels, rusk, tortillas, are all examples of farinaceous products, i.e of starch containing products. The basic ingredients for the preparation of such farinaceous products are flour and/or starch, water, milk and eggs. A wide variety of additional ingredients may be used in the preparation of these farinaceous products. Examples of such ingredients include yeast, baking powder, fat, sugar, salt and various additives.

Additives or baking aids are nowadays extensively used in the bakery industry. Among the commonly used baking aids in farinaceous products are emulsifiers. Emulsifiers are compounds having polar/hydrophilic and non-polar/lipophilic moieties. As a result, emulsifiers are able to migrate to the interface between a lipid or air phase and an aqueous phase.

Emulsifiers may be used to reduce the interfacial tension between lipid/water interfaces in doughs or batters, thereby improving gas retention and foam formation, and improving the dispersion of shortening/fat throughout a dough or batter. Emulsifiers are known to interact with gluten and this interaction can be used to achieve increased dough elasticity, improved fermentation stability, oven spring, a finer crumb and increased product volume. Moreover, emulsifiers are capable of forming complexes with starch resulting in improved freshness, softness and improved anti-staling properties of baked products.

In S.P. Cauvain and L.S. Young, Baked Products: Science, Technology and Practice, BakeTran, High Wycombe, Bucks UK, Blackwell Publishing, 2006, page 89, it is described that emulsifiers may be particularly useful when fat-reduced recipes are being prepared for the manufacture of all baked product groups since, in such cases, the emulsifier is more powerful than the fat on a weight basis at promoting many of the required properties, for example batter aeration and gas-bubble stability.

The Codex Alimentarius, or food code, has been created to regulate the specifications of additives, among which are emulsifiers, used in the food industry. Each country has its own set of regulations on what food ingredients are considered safe and at what usage levels. The regulations in the US are for example laid down in the US Code of Federal Regulations, Title 21 - Food and Drugs, whereas the European regulations are laid down in Regulation (EC) No 1333/2008 of the European Parliament and the Council of 16 December 2008 on Food Additives. According to European regulation, safe food additives are allocated a so-called E-number. These E-numbers have to be indicated on the packaging label of the food product.

All of the emulsifiers, except eggs, used in the preparation of farinaceous products have been allocated E-numbers. Food additives having E-numbers have been subjected to extensive testing before they are allowed to be included in foods and drinks. Nevertheless, in recent years, there has been an increasing public concern about possible health risks relating to the use of food additives. Hence, from a consumer perspective there is an increased preference towards food products not comprising additives having an E-number, i.e. food products having a so-called 'clean label'.

Due to, among other things, the ever-increasing population of the world, there is a continuous need for cheaper food ingredients and alternative cost-effective production routes for food products. Emulsifiers are among the most expensive ingredients in bakery products. Hence, there is a need for cheap alternatives that may fully or partially replace these emulsifiers without impairing the beneficial properties of emulsifiers in bakery products.

Fats and shortenings are added to farinaceous products for a variety of purposes. Fats and shortenings lubricate a dough, thereby facilitating mixing properties of the dough and resulting in improved dough handling during molding and sheeting. Other purposes of using fats and shortenings in farinaceous products relate to improved taste, softening of the crumb of baked products and to improved shelf-life of baked products.

B.E. Brooker, The Role of Fat in the Stabilisation of Gas Cells in Bread Dough, Journal of Cereal Science 24 (1996), 187-188, describes the mechanism by which fat which remains solid at proofing temperature, improves loaf volume during baking of bread. Breads were prepared comprising either 1 wt. %, based on the weight of the flour, of commercial bakery shortening (Ambrex) having a slip melting point of 45°C, an experimental shortening consisting of a mixture of hardened palm oil and rapeseed oil in a ratio 1:4 having a slip melting point of 41°C, or soya oil. The authors observe that electron microscopy has shown that during dough mixing by the Chorleywood Bread Process, fat crystals develop a crystal-water interface as they emerge from droplets of shortening and that they then adsorb to the gas-liquid interface of bubbles. In this process, the interface surrounding each crystal coalesces with the gas-liquid interface of the bubble. This adsorption process was not observed when triglyceride was added to doughs in the form of oil.

US 3,528,823 describes a fluid shortening consisting essentially of:

a) from 0.1% to 4% by weight of at least one ester of a polyglycerol
b) from 1% to 10% by weight of at least one normally solid triglyceride
c) from 2% to 15% by weight of at least one ester of propylene glycol
d) the balance of said composition being essentially at least one edible normally liquid triglyceride;

said polyglycerol ester (a) and said normally solid triglyceride (b) being in the form of a stable suspension.

US 3,582,355 discloses a method for the preparation of a mixed product of flour and fat particles, the fat particles having a size of less than 50 $\mu$m. In an example, flour material is blown into a chamber to form a dusty atmosphere of flour particles. Subsequently, a molten fatty material comprising 40 wt% stearyl tartrate, 40 wt% lecithin and 20 wt% refined and deodorized lard is sprayed into the atmosphere of flour particles. The temperature of the atmosphere in the chamber is maintained at a sufficiently low temperature to let the melted particles solidify into solid fat particles. Subsequently, the flour particles and fat particles are allowed to settle to form a mixed product. The mixed product is intended for use in bread.

WO 2002/100183 relates to micronized fat particles and their use in food products such as baked products. The micronized fat particles comprise fat ingredients and non-fat ingredients. The micronized particles have a mean weight diameter (MWD) of between 700 and 4000 $\mu$m.

WO 2004/037004 describes lipid-encapsulated functional bakery ingredients for use in the preparation of a dough. Example 3 describes the preparation of 4 doughs comprising 60 mg fat-coated amylase granules per 3000 g of wheat flour. These granules consist of 10 wt. % amylase and 90 wt. % lipid coating. The particle size of the granules is in the range of 200-400 $\mu$m.

US 2005/0123667 describes oil/fat powders comprising 15 to 79.9 wt. % of a glyceride mixture containing 5 to 84.9 wt. % of triglycerides, 0.1 to 5 wt. % of monoglycerides, 15 to 94.9 wt. % of diglycerides, 20 to 84.9 wt. % of one or at least two powder forming bases selected from carbohydrates, proteins and peptides and 0.1 to 5 wt% of water, wherein at least 50 wt. % of all the fatty acids are unsaturated fatty acids. It is mentioned that the oil/fat powders can be used in the preparation of bakery foods such as cookies, crackers, biscuits and short bread.

Application Examples 4 and 7 describe the preparation of biscuit from batter comprising 30 wt% of wheat flour and 20 wt% of oil/fat powder, based on dry weight. As can be deduced from tables 3, 4 and 5 the oil/fat powders contain substantial quantities of maltodextrin/dextrin. Furthermore, the oil/fat components employed either largely consist of diglycerides or of a liquid oil, i.e. rapeseed oil.

WO 2012/079955 describes a process for compacting a microporous fat powder in an extruder, said microporous fat powder having the following characteristics:

- a fat content of at least 50 wt.%;
- a solid fat content at 20°C ($N_{20}$) of least 10 wt.%;
- a freely settled density in the range of 10 to 200 g/l, preferably in the range of 20 to 150 g/l; and
- a particle size distribution with at least 90 vol.% of the particles having a diameter in the range of 3 to 400 $\mu$m.

This international patent application describes the use of the compacted microporous fat powder as an oil structuring agent in spreads, kitchen margarines, bakery margarines, said use comprising mixing of the fat powder with a liquid oil.

It is an object of the invention to provide a process of preparing a bakery ingredient mix of high quality in the form of a pourable liquid using no, or reduced quantities of emulsifier.

## SUMMARY OF THE INVENTION

The inventors have unexpectedly found that the aforementioned goal can be achieved by process as set out in the appended set of claims.

## DETAILED DESCTIPTION OF THE INVENTION

Accordingly, the invention relates to a process as set out in the appended set of claims

The term 'farinaceous product' as used herein refers to food products comprising flour, starch and combinations thereof as a main ingredient. The term 'farinaceous product' encompasses uncooked products such as dough or batter, as well as partially and fully cooked products that can be produced by, for instance, baking, frying, boiling, steaming and/or microwaving of dough or batter.

The term 'cereal' as used herein, refers to grains of grasses that are grown as a crop. Examples of cereals include wheat, rye, barley, oat, millet, rice and maize. The term 'cereal' also encompasses cereal bran, cereal flakes and crushed cereal grains (grit).

The term 'flour' as used herein, refers to a powder which is obtained by grinding cereal grains, beans, or other seeds.

The term 'starch' as used herein, unless indicated otherwise, refers to an industrially produced starch product that has been isolated from a plant source.

The term 'fat' as used herein, unless indicated otherwise, refers to lipids, notably lipids such as triglycerides, diglycerides, monoglycerides, phospholipids and combinations thereof.

The term 'fat particles' as used herein, unless indicated otherwise, refers to fat particles containing at least 65 wt.% of triglycerides.

The particle size distribution of the fat particles can suitably be determined by means of dry powder laser diffraction. Dry powder laser diffraction measurements use an air stream to disperse and carry the fat particles through the laser beam of a Laser Diffraction Particle Size Distribution Analyzer.

The particle size distribution can be measured with a laser diffraction/scattering particle size distribution analyzer Microtrac S3500 Laser Diffraction Systems (ex NIKKISO CO., LTD.). A sample feeding device for dry measurement, i.e., one-shot dry-type sample conditioner Turbotrac (ex NIKKISO CO., LTD.) is used to provide a homogeneous sample to the Microtrac analyzer.

Conditions under which the Turbotrac supplies a sample are as described below. A dust collector is used as a vacuum source applying a suction force of 450 W.

A 50% particle diameter ($D_{50}$) as an accumulated value on a volume basis is determined, on the base of accumulating the incidences of particles within the fractions of two particle sizes. The width of the fractions is increased such that the 10-log of the ratio of the upper and lower size is 0.075. The control and the analysis are performed with the software (version 10.3.3-202D) provided with the equipment.

Measurement conditions are as follows: a SetZero time of 20 seconds, a measuring time of 20 seconds, and the number of times of measurement of once. The refractive index of a particle is regarded as 1.45, the shape of the particle is regarded as a non-spherical shape, and a measurement upper limit and a measurement lower limit are set to 2000 $\mu$m and 0.289 $\mu$m, respectively. The measurement is performed in a normal-temperature, normal-humidity (23°C., 50% RH) environment.

Whenever reference is made to a percentage of the fat particles, unless indicated otherwise, this percentage refers to the volume weighted percentage.

Whenever reference is made to fat particles is should be understood that these particles may form loose agglomerates. Thus, when determining the diameter of individual fat particles within a fat powder, care should be taken to de-agglomerate the fat powder. This may be achieved by subjecting the fat powder to conditions of mild shear to break up the agglomerates (without damaging the principal fat particles) before determining the diameter of the fat particles.

Unless indicated otherwise, the verbs 'comprise', 'contain' and their conjugations are used in their non-limiting sense to mean that items following the word are included, without excluding items not specifically mentioned. In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

The flour that is employed in the present process is preferably selected from cereal flours from wheat, rye, barley, oat, maize, rice, ancient cereals such as emmer, einkorn and spelt, pseudo cereals like buckwheat, amaranth, quinoa and others, soy flour, so called whole meal flours and all combinations thereof. Preferably, the flour is selected from white and/or whole meal wheat flour, and combinations thereof.

The fat particles used in the present process are applied in the form of a fat powder, especially a fat powder that is free-flowing at 20°C.

The bulk density of the aforementioned fat powder is in the range of 0.02-0.3 g/ml. Bulk density as used herein refers to freely settled bulk density and is defined as the mass of a plurality of particles of the material divided by the total volume they occupy without compaction.

In a particularly preferred embodiment, the fat particles contain at least 70 wt.% of triglycerides, even more preferably at least 80 wt.% of triglycerides, most preferably at least 90 wt.% of triglycerides.

Typically, the fat particles contain at least 90 wt.%, more preferably at least 93 wt.% and most preferably at least 95 wt.% of glycerides selected from triglycerides, diglycerides and combinations thereof.

In an advantageous embodiment of the present invention the fat particles have a solid fat content $N_{25}$ of more than 30%, more preferably a solid fat content $N_{25}$ of more than 60%, most preferably a solid fat content $N_{25}$ of more than 80% .

The N-value $N_t$ equals the solid fat content of a fat at a temperature of t °C as measured by means of ISO 8292 - Animal and vegetable fats and oils - Determination of solid fat content - Pulsed nuclear magnetic resonance method.

The fat contained in the fat particles has a solid fat profile of:

- $N_{20} \geq 40\%$; preferably $N_{20} \geq 70\%$; preferably $N_{20} \geq 85\%$;

- $N_{30} \geq 20\%$; preferably $N_{30} \geq 40\%$; preferably $N_{30} \geq 70\%$;
- $N_{40} \geq 5\%$; preferably $N_{40} \geq 30\%$; preferably $N_{40} \geq 60\%$.

According to a particularly preferred embodiment, the fat particles are completely made up of fat.

The fat particles of the present invention may contain small quantities of dispersed particles of non-lipophilic material. Preferably, the fat particles do not contain dispersed material. In other words, the fat particles are preferably monophasic fat particles.

In a preferred embodiment, at least 50 vol.% of the fat particles has a diameter less than 40 $\mu$m. More preferably, at least 50 vol..% of said fat particles has diameter of less than 35 $\mu$m, even more preferably at least 50 vol.% of the fat particles has a diameter in the range of 3-30 $\mu$m. Most preferably, at least 50 vol.% of the fat particles has a diameter in the range of 5-25 $\mu$m.

In another preferred embodiment at least 75 vol.% of the fat particles has a diameter less than 80 $\mu$m. More preferably, at least 75 vol.% of said fat particles has a diameter less than 60 $\mu$m, most preferably a diameter in the range of 1-50 $\mu$m.

The use of fat particles having a very small diameter offers the advantage vis-à-vis larger particles that the same concentration of fat particles can be achieved in the farinaceous mixture using much smaller quantities. Although the inventors do not wish to be bound by theory it is believed that the benefits provided by the fat particles in accordance with the present invention are more dependent on the number of fat particles per volume of farinaceous mixture than on the total mass of fat particles per volume of farinaceous mixture.

In another preferred embodiment, the fat particles have a volume-weighted average diameter in the range of 5-40 $\mu$m and most preferably of in the range 7-30 $\mu$m.

The fat particles according to the present invention advantageously comprises a high melting fat component. High-melting fats may be prepared by hydrogenating (hardening) a vegetable oil or by fractionating the oil into a high melting fraction (stearin) and a low melting fraction (olein). An undesirable side-effect of partial hydrogenation is the formation of substantial levels of trans-unsaturated fatty acids. Trans-unsaturated fatty acids, unlike the naturally occurring cis-unsaturated fatty acids, have been associated with health risks. Accordingly, the fat particles according to the present invention advantageously do not comprise partially hydrogenated vegetable oils. In another preferred embodiment, the fat particles comprise less than 3 wt. %, more preferably less than 2 wt. %, even more preferably less than 1 wt. % of trans-fatty acids based on the total amount of fatty acids present in the fat particles.

As explained herein before, the fat particles of the present invention provide beneficial properties to farinaceous products, similar to those achieved by emulsifiers. Hence, the use of the fat particles allows for a reduction or even the complete removal of emulsifier without impairing the required properties of farinaceous products. Accordingly, in a preferred embodiment, the fat particles contain less than 20 wt.%, more preferably less than 10 wt.% of emulsifier selected from diacetyl tartaric acid ester of mono- and diglycerides (DATEM), citric acid ester of mono- and diglycerides (CITREM), lactic acid ester mono- and diglycerides (LACTEM), acetic acid ester of mono- and diglycerides (ACETEM), calcium stearoyl-2-lactylate (CSL), sodium stearoyl-2-lactylate (SSL) and combinations thereof. Most preferably, the fat particles do not contain the aforementioned emulsifier.

It is noted that the fat particles of the present invention will usually contain small amounts of mono- and diglycerides as these glycerides are naturally present in refined vegetable oils.

The term 'sugar' as used herein refers to monosaccharides, disaccharides and combinations thereof.

The term 'polysaccharide' as used herein refers to polymeric carbohydrate molecules composed of long chains of monosaccharide units bound together by glycosidic linkages.

The term 'oil' in the context of the present invention refers to a fat that is liquid at 20°C.

In a preferred embodiment, the bakery ingredient mix comprises one or more enzymes. Preferred enzymes are as defined herein before.

In another preferred embodiment the process yields a pumpable oil based liquid. The amount of fat particles contained in the pumpable bakery ingredient mix preferably is at least 1 wt.%, more preferably at least 2 wt.%.

The following examples are meant to further illustrate the invention and some of its preferred embodiments without intending to limit its scope.

## EXAMPLES

Example 1

Micronised fat was prepared from flakes having the following specification.

| Type of fat | Double fractionated palm stearin |
|---|---|
| Iodine value | 12 |
| Saturated fatty acids | 88% |
| Monounsaturated fatty acids | 10% |
| Polyunsaturated fatty acids | 2% |
| Melting point | 62°C |
| $N_{20}$ | 94% |
| $N_{30}$ | 89% |
| $N_{35}$ | 84% |
| $N_{40}$ | 78% |

The fat flakes were melted in an oven (80°C) and the melted fat was inserted, after having dispersed 1% of water throughout the molten fat, into a high pressure autoclave equipped with an automatic stirrer. Pressurized $CO_2$ was introduced into the autoclave (see Figure 1) to a pressure of 300 bar and 55°C. The system was kept under the designated conditions for 10 minutes under continuous mixing. Then the material was sprayed over a nozzle into a which was pre-cooled by injecting liquid $CO_2$ that expanded and cooled down as a consequence, cooling down the vessel. During the spraying, $CO_2$ was continuously fed into the autoclave to maintain constant spraying conditions. After 3minutes spraying was stopped and the micronized fat powder was removed from the drum.

Bulk density of the micronized fat powder was 76 g/L.

The particle size distribution of the fat particles in the micronized fat was analysed by Powder Laser Diffraction Technology (Microtrac). The powder had the following particle size distribution:

- 95% volume < 45 $\mu$m
- 90% volume < 40 $\mu$m
- 85% volume < 30$\mu$m
- 65% volume < 20$\mu$m
- 30% volume < 10$\mu$m

The volume weighed mean particle size was 15 $\mu$m. The distribution was trimodal having maxima at 4 $\mu$m, 22 $\mu$m and 105 $\mu$m. (SEM analysis showed that larger particles, e.g. 80 $\mu$m, were generally agglomerates of smaller particles).

Example 2

Crusty bread rolls were prepared on the basis of the recipes shown in Table 1 (concentrations in baker's percentage).

Table 1

| | Product A | Product B | Product C | Control |
|---|---|---|---|---|
| Standard German flour T550 | 100% | 100% | 100% | 100% |
| Water | 58% | 58% | 58% | 58% |
| Cream yeast | 3.5% | 3.5% | 3.5% | 3.5% |
| Bread improver [1] | 3.5% | 3.5% | 3.5% | 3.5% |
| DATEM | 0.4% | | | |
| Fat (non-micronised) [2] | | 0.4% | | |
| Micronised fat [3] | | | 0.4% | |
| [1] Bread improver did not contain emulsifier [2] Fat flakes used in the preparation of the micronized fat in Example 1 [3] Micronised fat described in Example 1 | | | | |

The bread dough was prepared by kneading the dough in a conventional spiral mixer at 2 minutes slow and 6 minutes fast speed, followed by resting for 5 minutes. Next, the dough was fed to an automatic line (dough extruder Fortuna KM, shaping/cutting Kövy KA/S) where the dough pieces were scaled to 60 g, rounded and rolled, cut and then placed on a tray with textile cover with the cut on the bottom side. The trays were put into a retarder, where the following temperature regime was applied: 5°C for 5 hours at 70% relative humidity (RH), 15°C for 5 hours at 90% RH and 5°C for 3 hours at 80% RH. The dough pieces were taken out of the retarder, turned around, proofed at 25 °C and 85% RH for 60 or 75 minutes, put on a tray and baked in the oven at 230°C for 18 minutes with steam.

The doughs were evaluated by expert bakers for firmness, elasticity, extensibility and stickiness. Using a scoring scale from -5 till +5, wherein 0 represented the score obtained for the control product. Furthermore, the specific volume of the doughs was determined after 60 minutes and 75 minutes of proofing. The results of these evaluations are shown in Table 2.

Table 2

|  | Firmness | Elasticity | Extensibility | Stickiness | SV% after 60 min. | SV% after 75 min. |
|---|---|---|---|---|---|---|
| Control | 0 | 0 | 0 | 0 | 100 | 100 |
| Product A | +2 | +2 | -1 | +2 | 119 | 122 |
| Product B | 0 | 0 | 0 | 0 | 102 | 101 |
| Product C | +2 | +1 | +1 | +1 | 116 | 119 |

From Table 2 it is clear that addition of 0.4% non-micronised fat (Product B) had no impact on dough properties and specific volume. Addition of 0.4% DATEM (Product A) clearly improved dough properties and specific volume. A similar improvement was realized by the addition of 0.4% micronised fat (Product C).

Example 3

Tin bread was prepared on the basis of the recipes shown in Table 3 (concentrations in baker's percentage).

Table 3

|  | Product A | Product B | Product C | Control |
|---|---|---|---|---|
| Standard German flour T550 | 100% | 100% | 100% | 100% |
| Water | 58% | 58% | 58% | 58% |
| Cream yeast | 4% | 4% | 4% | 4% |
| Bread improver [1] | 1% | 1% | 1% | 1% |
| DATEM | 0.3% | | | |
| Fat (non-micronised) [2] | | 0.3% | | |
| Micronised fat [3] | | | 0.3% | |
| [1] Bread improver did not contain emulsifier<br>[2] Fat flakes used in the preparation of the micronized fat in Example 1Micronised fat described in Example 1 | | | | |

The bread dough was prepared by kneading the dough in a conventional spiral mixer at 2 minutes slow and 5 minutes fast speed, followed by resting for 5 minutes. After dough rest the dough was moulded, and placed in a baking tin. Subsequently, the doughs were proofed for 45 minutes or 65 minutes at 33 °C at 85% RH. The doughs were baked in an oven with steam at 240°C for 35 minutes.

The doughs were evaluated by expert bakers for firmness, elasticity, extensibility and stickiness, using a scoring scale from -5 till +5, wherein 0 represented the score obtained for a control product. Furthermore, the specific volume of the doughs was determined after 60 minutes and 75 minutes of proofing. The results of these evaluations are shown in Table 4.

Table 4

|  | Firmness | Elasticity | Extensibility | Stickiness | SV% after 60 min. | SV% after 75 min. |
|---|---|---|---|---|---|---|
| Control | 0 | 0 | 0 | 0 | 100 | 100 |

(continued)

| | Firmness | Elasticity | Extensibility | Stickiness | SV% after 60 min. | SV% after 75 min. |
|---|---|---|---|---|---|---|
| Product A | +2 | +2 | -1 | +2 | 109 | 116 |
| Product B | 0 | 0 | 0 | 0 | 99 | 101 |
| Product C | +2 | +1 | +1 | +1 | 107 | 114 |

From Table 4 it is clear that addition of 0.4% non-micronised fat (Product B) had no impact on dough properties and specific volume. Addition of 0.4% DATEM (Product A) clearly improved dough properties and loaf volume. A similar improvement was realized by the addition of 0.4% micronised fat (Product C).

## Claims

1. A process of preparing a bakery ingredient mix in the form of a pourable liquid, said process comprising combining:

   • 1-10 wt.% of fat particles in the form of fat powder with a bulk density in the range of 0.02-0.3 g/ml, said fat particles containing at least 65 wt.% of triglycerides and at least 90 wt.% of glycerides selected from triglycerides, diglycerides and combinations thereof;
   • 40-98 wt.% of one or more bulk ingredients selected from flour, polysaccharide, sugar, oil and combinations thereof, including 30-96% oil by weight of the bakery ingredient mix; and
   • 0.2-50 wt.% of one or more functional ingredients selected from enzymes, ascorbic acid, chemical leavening agent, baker's yeast, active lactic acid bacteria and combinations thereof;
   wherein at least 50 vol.% of the fat particles has a diameter in the range of 1-50 $\mu$m and wherein the fat particles have a volume weighted average diameter of less than 50 $\mu$m, as determined by means of dry powder laser diffraction; wherein the fat that is contained in the fat particles has a solid fat profile of:

$$N_{20} \geq 40\%;$$

$$N_{30} \geq 20\%;$$

$$N_{40} \geq 5\%;$$

   wherein the N-value $N_t$ equals the solid fat content of a fat at a temperature of t °C as measured by means of ISO 8292 - Animal and vegetable fats and oils - Determination of solid fat content - Pulsed nuclear magnetic resonance method; and
   wherein the combination of fat powder, the one or more bulk ingredients and the one or more functional ingredients represents at least 60 wt.% of the bakery ingredient mix.

2. Process according to claim 1, wherein the fat contained in the fat particles has a solid fat content at 30 °C ($N_{30}$) of at least 40%, preferably of at least 70%.

3. Process according to claim 1 or 2, wherein the fat contained in the fat particles has a solid fat content at 40 °C ($N_{40}$) of at least 30%, preferably of at least 60%.

4. Process according to any one of claims 1-3, wherein at least 75 vol.% of the fat particles has a diameter less than 80 $\mu$m.

5. Process according to any one of claims 1-4, wherein the fat particles have a volume-weighted average diameter in the range of 5-40 $\mu$m, preferably in the range of 7-30 $\mu$m

## Patentansprüche

1. Verfahren zur Herstellung einer Backzutatenmischung in Form einer gießbaren Flüssigkeit, wobei das Verfahren das Kombinieren umfasst von:

- 1-10 Gew.-% Fettpartikel in Form von Fettpulver mit einer Schüttdichte im Bereich von 0,02-0,3 g/ml, wobei die Fettpartikel mindestens 65 Gew.-% Triglyceride und mindestens 90 Gew.-% Glyceride, ausgewählt aus Triglyceriden, Diglyceriden und Kombinationen davon, enthalten;
- 40-98 Gew.-% einer oder mehrerer loser Zutaten, ausgewählt aus Mehl, Polysaccharid, Zucker, Öl und Kombinationen davon, einschließlich 30-96% Öl, bezogen auf das Gewicht der Backzutatenmischung ; und
- 0,2-50 Gew.-% eines oder mehrerer funktioneller Inhaltsstoffe, ausgewählt aus Enzymen, Ascorbinsäure, chemischem Backtriebmittel, Bäckerhefe, aktiven Milchsäurebakterien und Kombinationen davon;
wobei mindestens 50 Vol.-% der Fettpartikel einen Durchmesser im Bereich von 1-50 $\mu$m haben und wobei die Fettpartikel einen volumengewichteten mittleren Durchmesser von weniger als 50 $\mu$m haben, wie mittels Trockenpulver-Laserbeugung bestimmt; wobei das Fett, das in den Fettpartikeln enthalten ist, ein Festfettprofil hat von

$$N_{20} \geq 40\%;$$

$$N_{30} \geq 20\%;$$

$$N_{40} \geq 5\%;$$

wobei der N-Wert $N_t$ dem Festfettgehalt eines Fetts bei einer Temperatur von t °C entspricht, gemessen mittels ISO 8292 - Tierische und pflanzliche Fette und Öle - Bestimmung des Festfettgehalts - Gepulste kernmagnetische Resonanzmethode; und wobei die Kombination aus Fettpulver, dem einen oder mehreren losen Zutaten und dem einen oder mehreren funktionellen Inhaltsstoffen mindestens 60 Gew.-% der Backzutatenmischung ausmacht.

2. Verfahren nach Anspruch 1, wobei das in den Fettpartikeln enthaltene Fett einen Festfettgehalt von mindestens 40 %, vorzugsweise von mindestens 70 %, bei 30 °C ($N_{30}$) aufweist.

3. Verfahren nach Anspruch 1 oder 2, wobei das in den Fettpartikeln enthaltene Fett einen Festfettgehalt von mindestens 30 %, vorzugsweise von mindestens 60 %, bei 40 °C ($N_{40}$) aufweist.

4. Verfahren nach einem der Ansprüche 1 bis 3, wobei mindestens 75 Vol.-% der Fettpartikel einen Durchmesser von weniger als 80 $\mu$m aufweisen.

5. Verfahren nach einem der Ansprüche 1 bis 4, wobei die Fettpartikel einen volumengewichteten mittleren Durchmesser im Bereich von 5 - 40 $\mu$m, vorzugsweise im Bereich von 7 - 30 $\mu$m, aufweisen.

**Revendications**

1. Procédé de préparation d'un mélange d'ingrédients de boulangerie sous la forme d'un liquide pouvant être versé, ledit procédé comprenant l'étape consistant à combiner :

• de 1 à 10 % en poids de particules grasses sous forme de poudre grasse avec une densité apparente dans la plage de 0,02 à 0,3 g/ml, lesdites particules grasses contenant au moins 65 % en poids de triglycérides et au moins 90 % en poids de glycérides choisis parmi les triglycérides, les diglycérides et des combinaisons de ceux-ci ;
• de 40 à 98 % en poids d'un ou plusieurs ingrédients en vrac choisis parmi la farine, le polysaccharide, le sucre, l'huile et des combinaisons de ceux-ci, y compris de 30 à 96 % d'huile en poids du mélange d'ingrédients de boulangerie ; et
• de 0,2 à 50 % en poids d'un ou plusieurs ingrédients fonctionnels choisis parmi des enzymes, l'acide ascorbique, un agent de levage chimique, la levure de boulangerie, des bactéries d'acide lactique actives et des combinaisons de ceux-ci ;
dans lequel au moins 50 % en volume des particules grasses présentent un diamètre dans la plage de 1 à 50 $\mu$m, et dans lequel les particules grasses présentent un diamètre moyen pondéré en volume inférieur à 50 $\mu$m, tel que déterminé au moyen d'une diffraction laser sur poudre sèche ; dans lequel la matière grasse contenue dans les particules grasses présente un profil de matière grasse solide de :

$$N_{20} \geq 40 \ \% \ ;$$

$$N_{30} \geq 20 \ \% \ ;$$

$$N_{40} \geq 5 \ \% \ ;$$

dans lequel la valeur N $N_t$ est égale à la teneur en matière grasse solide d'une matière grasse à une température de t °C telle que mesurée au moyen de la norme ISO 8292 - Matières grasses et huiles animales et végétales - Détermination de la teneur en matière grasse solide - Procédé par résonance magnétique nucléaire pulsée ; et dans lequel la combinaison de la poudre grasse, des un ou plusieurs ingrédients en vrac et des un ou plusieurs ingrédients fonctionnels représente au moins 60 % en poids du mélange d'ingrédients de boulangerie.

2. Procédé selon la revendication 1, dans lequel la matière grasse contenue dans les particules grasses présente une teneur en matière grasse solide à 30°C ($N_{30}$) d'au moins 40 %, de préférence d'au moins 70 %.

3. Procédé selon la revendication 1 ou 2, dans lequel la matière grasse contenue dans les particules grasses présente une teneur en matière grasse solide à 40°C ($N_{40}$) d'au moins 30 %, de préférence d'au moins 60 %.

4. Procédé selon l'une quelconque des revendications 1 à 3, dans lequel au moins 75 % en volume des particules grasses présentent un diamètre inférieur à 80 $\mu$m.

5. Procédé selon l'une quelconque des revendications 1 à 4, dans lequel les particules grasses présentent un diamètre moyen pondéré en volume dans la plage de 5 à 40 $\mu$m, de préférence dans la plage de 7 à 30 $\mu$m.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13332008 A
- US 3528823 A
- US 3582355 A
- WO 2002100183 A
- WO 2004037004 A
- US 20050123667 A
- WO 2012079955 A

**Non-patent literature cited in the description**

- **S.P. CAUVAIN** ; **L.S. YOUNG**. Baked Products: Science, Technology and Practice, BakeTran, High Wycombe, Bucks UK. Blackwell Publishing, 2006, 89
- **B.E. BROOKER**. The Role of Fat in the Stabilisation of Gas Cells in Bread Dough. *Journal of Cereal Science*, 1996, vol. 24, 187-188